# EUROPEAN PATENT APPLICATION

(11) **EP 4 697 647 A1**
(43) Date of publication of application: **18.02.2026**
(21) Application number: 25775631.2
(22) Date of filing: 16.01.2025
(51) Int. Cl.: H04L 9/32

(54) **ANTI-REPLACEMENT PRODUCTION METHOD AND SYSTEM FOR AUTOMOBILE CONTROLLER CHIP, AND ANTI-REPLACEMENT DETECTION METHOD AND SYSTEM FOR AUTOMOBILE CONTROLLER CHIP**

(30) Priority: 28.03.2024 CN 202410368794
(71) Applicant: Chongqing Changan Technology Co., Ltd., Chongqing 401135 (CN)
(72) Inventor: XIAO, Xu, Chongqing 401135 (CN)
(74) Representative: Herrero & Asociados, S.L.
(86) International application number: PCT/CN2025/072837
(87) International publication number: WO 2025/200728

(57) **Abstract**

The present invention relates to the field of embedded technology. Disclosed are an anti-replacement production method and system for an automobile controller chip, and an anti-replacement detection method and system for an automobile controller chip. The anti-replacement production method comprises: acquiring chip identity feature information; calculating a first hash value, and storing the first hash value; uploading the first hash value; signing the uploaded first hash value, and generating signature information; and storing the signature information. The anti-replacement detection method comprises: creating a detection task; acquiring signature information written during the anti-replacement production method, and performing signature verification to obtain a second hash value; calculating a third hash value and using same as a metric value; and making a comparison. The present invention only requires the consumption of a small amount of FLASH space and a small number of chip computing resources in an automobile controller to achieve real-time detection of anti-replacement of an automobile controller chip without the need for relying on other external devices. By means of the signature and signature verification of a hash value for chip identity feature information, false detection of the replacement of a chip caused by the replacement of an external FLASH of the chip can be prevented, thereby guaranteeing the safety and reliability of a vehicle.

## Description

### CROSS-REFERENCE TO RELATED APPLICATIONS

This application claims priority to and benefits of the Chinese Patent Application No. CN202410368794.0, filed on March 28, 2024, with the China National Intellectual Property Administration (CNIPA), the entire contents of which are incorporated herein by reference.

### TECHNICAL FIELD

The present disclosure relates to the field of embedded technologies, and particularly, to an anti-replacement production and detection method and a system for automotive controller chips.

### BACKGROUND

With the continuous development of automotive intelligent technology, the architecture of automotive controllers has evolved from the traditional distributed architecture requiring a large number of single-function MCU controllers to a centralized architecture with cabin domain SOC chips and driving domain SOC chips as the core controllers, followed by the subsequent emergence of a central centralized architecture with integrated cockpit-driving SOC chips. In the era of intelligent vehicles, SOC chips that carry intelligent cockpit and intelligent driving functions will be the core components of automobiles. Malicious replacement of the core SOC chips in automotive controllers will affect the safety and reliability of the entire automotive controller. The existing hardware anti-replacement methods based on processor security cores have the following shortcomings: (1) They require utilizing the security core functionality of the CPU, but not all CPUs possess a security core. (2) They can only perform anti-replacement verification on peripherals connected to the CPU and cannot detect whether the CPU itself has been replaced. (3) The anti-replacement detection for peripherals occurs during the BIOS boot phase and cannot continue to perform real-time detection of whether peripheral replacement has occurred after the BIOS boot is completed.

The related art discloses a method for permanent anti-tampering protection of intelligent POS terminals. In this method, a customer-customized signature for a Security Processor (SP) is intended to prevent the compiled SP firmware from being illegally tampered with or replaced. The anti-tampering is achieved by calculating a hash value of the compiled firmware program, then signing it with a private key, and packaging the signature information into the firmware. However, this method is unable to detect whether the CPU has been replaced.

### SUMMARY OF THE DISCLOSURE

The present disclosure aims to provide an anti-replacement production and detection method and system for automotive controller chips, achieving real-time anti-replacement monitoring of the chip itself.

To achieve the above objective, the present disclosure provides an anti-replacement production method for an automotive controller chip, including the following steps:
S1: after the automotive controller chip is powered on and started, obtaining chip identity feature information from a one-time programmable memory of the automotive controller chip.
S2: calculating to obtain a first hash value based on the chip identity feature information, and saving the first hash value to a FLASH memory externally connected to the automotive controller chip;
S3: uploading the first hash value generated based on the chip identity feature information to a local computer, then uploading, by the local computer, the first hash value to a signature server, and signing, by the signature server, the first hash value uploaded to the signature server with a private key of an asymmetric algorithm, for generating signature information; and
S4: sending, by the signature server, the signature information to the local computer, then sending, by the local computer, the signature information to the automotive controller chip, and saving, by the automotive controller chip, the signature information to the FLASH memory.

In some embodiments, in the S1, the chip identity feature information is a piece of information written into the one-time programmable memory of the automotive controller chip when the automotive controller chip leaves the factory, and the chip identity feature information of each chip is unique.

In some embodiments, in the S2, a secure hash algorithm is applied to calculate and obtain the first hash value from the chip identity feature information, and the first hash value is then saved to the FLASH memory; the secure hash algorithm includes SHA-1, SHA-224, SHA-256, SHA-384, and SHA512.

In some embodiments, the first hash value has a fixed length determined by the secure hash algorithm; the secure hash algorithm is SHA-1, SHA-224, SHA-256, SHA-384, or SHA-512, wherein in a case where the SHA-1 is selected, the fixed length is 1; in a case where the SHA-224 is selected, the fixed length is 224; in a case where the SHA-256 is selected, the fixed length is 256; in a case where the SHA-384 is selected, the fixed length is 384; in a case where the SHA-512 is selected, the fixed length is 512.

The present disclosure further provides an anti-replacement production system for an automotive controller chip, including a signature server, a local computer, and an automotive controller chip; wherein a first hash value is configured to be calculated and obtained based on chip identity feature information of the automotive controller chip and saved to a FLASH memory externally connected to the automotive controller chip; the first hash value is configured to be uploaded to the local computer; the local computer is configured to upload the first hash value to the signature server; the signature server is configured to sign the first hash value with a private key of an asymmetric algorithm and then send signature information of the first hash value to the local computer; the local computer is configured to send the signature information to the automotive controller chip, and the automotive controller chip is configured to save the signature information in the FLASH memory.

In some embodiments, the automotive controller chip includes an identity feature information obtaining module, a secure hash algorithm module, a signature information obtaining module, and a signature information storage module;
the identity feature information obtaining module is configured to obtain the chip identity feature information from a one-time programmable memory of the automotive controller chip;
the secure hash algorithm module is configured to provide a secure hash algorithm for generating a fixed-length hash value from the identity feature information in the one-time programmable memory of the automotive controller chip;
the signature information obtaining module is configured to obtain the signature information after the server signs the hash value with the private key of the asymmetric algorithm; and
the signature information storage module is configured to save the signature information in the FLASH memory externally connected to the automotive controller chip.

In some embodiments, the secure hash algorithm includes SHA-1, SHA-224, SHA-256, SHA-384, and SHA512.

In some embodiments, the first hash value has a fixed length determined by the secure hash algorithm; the secure hash algorithm is SHA-1, SHA-224, SHA-256, SHA-384, or SHA-512, wherein in a case where the SHA-1 is selected, the fixed length is 1; in a case where the SHA-224 is selected, the fixed length is 224; in a case where the SHA-256 is selected, the fixed length is 256; in a case where the SHA-384 is selected, the fixed length is 384; in a case where the SHA-512 is selected, the fixed length is 512.

In some embodiments, the chip identity feature information is a piece of information written into the one-time programmable memory of the automotive controller chip when the automotive controller chip leaves the factory, and the chip identity feature information of each chip is unique.

The present disclosure further provides an anti-replacement detection method for an automotive controller chip, which is based on the signature information obtained in the anti-replacement production method as above and includes:
SA: performing signature verification on the signature information via the public key of the asymmetric algorithm, and obtaining a second hash value; in a case where the signature verification fails, determining that the signature information saved in the FLASH memory externally connected to the chip is incorrect and a risk that the FLASH memory has been replaced exists, and performing SB; in a case where the signature verification passes, taking the second hash value as a benchmark value and performing SC;
SB: uploading risk information indicating potential replacement of the FLASH memory to a vehicle infotainment system, and uploading, by the vehicle infotainment system, the risk information to a cloud via a telematics box (TBOX) system;
SC: obtaining the chip identity feature information saved in the one-time programmable memory of the chip, calculating to obtain a third hash value based on the chip identity feature information via a secure hash algorithm, and taking the third hash value as a measurement value; and
SD: comparing the measurement value and the benchmark value; in a case where the measurement value is consistent with the benchmark value, determining that the chip has not been replaced, and waiting for a fixed time cycle and then returning to the SA to continue anti-replacement detection; in a case where the measurement value is inconsistent with the benchmark value, determining that a risk that the chip has been replaced exists, uploading risk information indicating potential replacement of the chip to the vehicle infotainment system, and uploading, by the vehicle infotainment system, the risk information to the cloud via the telematics system.

In some embodiments, in the SD, the fixed time cycle is set to 8 hours or 24 hours.

The present disclosure further provides an anti-replacement detection system for an automotive controller chip, including an automotive controller chip, a cloud platform, and a vehicle infotainment system; wherein signature information stored in a FLASH memory externally connected to the automotive controller chip is obtained, which is obtained through an anti-replacement production method for an automotive controller chip; a public key of an asymmetric algorithm to is applied to perform signature verification on the signature information; in a case where the signature verification fails, it is indicated that the signature information saved in the FLASH memory externally connected to the automotive controller chip is incorrect, and risk information is reported to the vehicle infotainment system and the cloud; in a case where the verification passes, a second hash value is taken as a benchmark value; the chip identity feature information saved in the one-time programmable memory of the automotive controller chip is obtained, and a secure hash algorithm is applied to calculate a third hash value as a measurement value; the measurement value and the benchmark value are compared; in a case where the comparison result is inconsistent, it is indicated that a risk that the chip has been replaced exists, and risk information is reported to the vehicle infotainment system and the cloud.

In some embodiments, the automotive controller chip includes an identity feature information obtaining module, a secure hash algorithm module, a signature information storage module, a signature information verification module, a hash value comparison module, and an anti-replacement result reporting module;
the identity feature information obtaining module is configured to obtain the chip identity feature information from a one-time programmable memory of the automotive controller chip;
the secure hash algorithm module is configured to provide a secure hash algorithm for generating a fixed-length hash value from the identity feature information in the one-time programmable memory of the automotive controller chip;
the signature information obtaining module is configured to obtain the signature information after the server signs the hash value with the private key of the asymmetric algorithm;
the signature information storage module is configured to save the signature information in the FLASH memory externally connected to the automotive controller chip;
the signature information verification module configured to perform signature verification based on the public key of the asymmetric algorithm solidified in the one-time programmable memory of the chip and the signature information stored in the FLASH memory from the production method, and obtaining a corresponding hash value as a benchmark value;
the hash value comparison module is configured to recalculate the hash value of the chip identity feature information in the one-time programmable memory of the chip via a secure hash algorithm, take the hash value as a measurement value, and compare the measurement value with the benchmark value obtained from the signature verification to determine whether the measurement value and the benchmark value are consistent; and
the anti-replacement result reporting module is configured to report the risk information regarding whether the chip has been replaced to the vehicle infotainment system and the cloud.

Compared with the prior art, the beneficial effects of the present disclosure are as follows:
The present disclosure only consumes a small amount of FLASH space and chip computing resources in the automotive controller, without requiring other external devices, to achieve real-time detection of automotive controller chip anti-replacement. Through the signing and verification of the hash value of the chip's identity feature information, it can prevent false detection of chip replacement caused by the replacement of the chip's external FLASH memory, ensuring vehicle safety and reliability.

### BRIEF DESCRIPTION OF THE DRAWINGS

FIG. 1 is a flowchart of an anti-replacement production method for an automotive controller chip according to some embodiments of the present disclosure.
FIG. 2 is a flowchart of an anti-replacement detection method for an automotive controller chip according to some embodiments of the present disclosure.
FIG. 3 is an architectural diagram of an anti-replacement production system for an automotive controller chip according to some embodiments of the present disclosure.
FIG. 4 is an architectural diagram of an anti-replacement detection system for an automotive controller chip according to some embodiments of the present disclosure.
FIG. 5 is a schematic diagram of information flow in an anti-replacement production method for an automotive controller chip according to some embodiments of the present disclosure.
FIG. 6 is a schematic diagram of information flow in an anti-replacement detection method for an automotive controller chip according to some embodiments of the present disclosure.

### DETAILED DESCRIPTION

The specific embodiments of the present disclosure will be described in detail below with reference to the accompanying drawings and examples. The following examples are intended to illustrate the present disclosure but not to limit its scope.

In the description of the present disclosure, it should be noted that the orientation or positional relationships indicated by terms such as "center", "longitudinal", "transverse", "upper", "lower", "front", "rear", "left", "right", "vertical", "horizontal", "top", "bottom", "internal", "external", etc., are based on the orientation or positional relationships shown in the drawings. These terms are intended only to facilitate the description of the present disclosure and simplify the description, and do not indicate or imply that the referred device or element must have a specific orientation or be constructed and operated in a specific orientation. Therefore, they should not be construed as limiting the disclosure. Furthermore, terms such as "first", "second", and "third" are for descriptive purposes only and should not be construed as indicating or implying relative importance.

In the description of the present disclosure, it should be noted that, unless otherwise clearly specified and defined, the terms "install", "connect", and "link" should be understood broadly. For example, they may refer to a fixed connection, a detachable connection, or an integrated connection; a mechanical connection, an electrical connection, or a direct connection; a connection through an intermediate medium, or a connection between the interiors of two elements. Those skilled in the art can understand the specific meanings of these terms in the present disclosure based on the specific context.

Furthermore, in the description of the present disclosure, unless otherwise stated, "a plurality of" means two or more.

### Embodiment 1

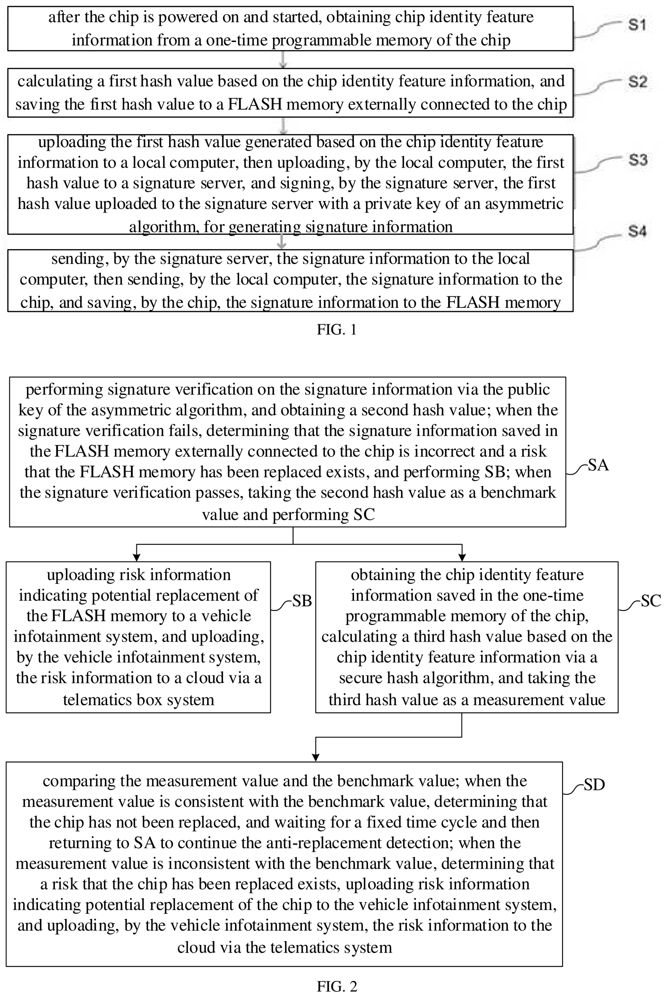

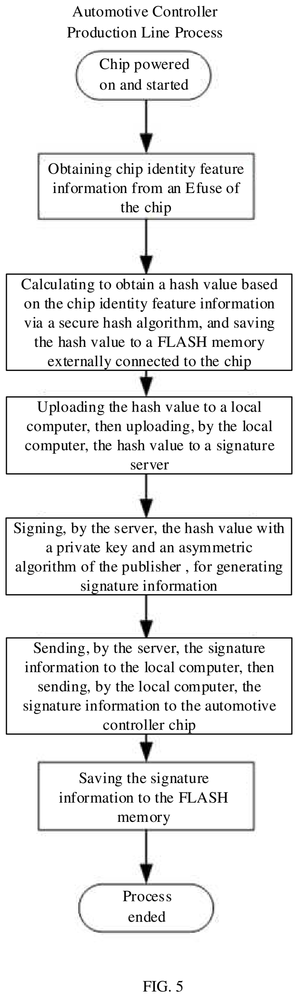

As shown in FIGS. 1 and 5, an anti-replacement production method for an automotive controller chip according to a preferred embodiment of the present disclosure includes operations at blocks illustrated herein.

At block S1: after the chip is powered on and started, obtaining chip identity feature information from a one-time programmable memory (eFuse) of the chip.

At block S2: calculating a first hash value based on the chip identity feature information, and saving the first hash value to a FLASH memory externally connected to the chip.

At block S3: uploading the first hash value generated based on the chip identity feature information to a local computer, then uploading, by the local computer, the first hash value to a signature server, and signing, by the signature server, the first hash value uploaded to the signature server with a private key of an asymmetric algorithm, for generating signature information.

At block S4: sending, by the signature server, the signature information to the local computer, then sending, by the local computer, the signature information to the chip, and saving, by the chip, the signature information to the FLASH memory.

As shown in FIGS. 1, 2, and 5, in S1, the chip identity feature information may be a piece of information written into the chip's one-time programmable memory when the chip leaves the factory. The chip identity feature information of each chip is unique.

In S2, a secure hash algorithm may be applied to calculate the first hash value from the obtained chip identity feature information, and the first hash value is then saved to the externally connected FLASH memory. The secure hash algorithm may include SHA-1, SHA-224, SHA-256, SHA-384, and SHA512, etc.

The first hash value may have a fixed length, which is determined by the selected secure hash algorithm. The secure hash algorithm is SHA-1, SHA-224, SHA-256, SHA-384, or SHA-512. When SHA-1 is selected, the fixed length is 1; when SHA-224 is selected, the fixed length is 224; when SHA-256 is selected, the fixed length is 256; when SHA-384 is selected, the fixed length is 384; when SHA-512 is selected, the fixed length is 512.

In S3, the private key of the asymmetric algorithm may be a private key of an asymmetric algorithm of a publisher of a chip system image file.

In the above embodiments, the secure hash algorithm may be replaced with a CRC algorithm.

### Embodiment 2

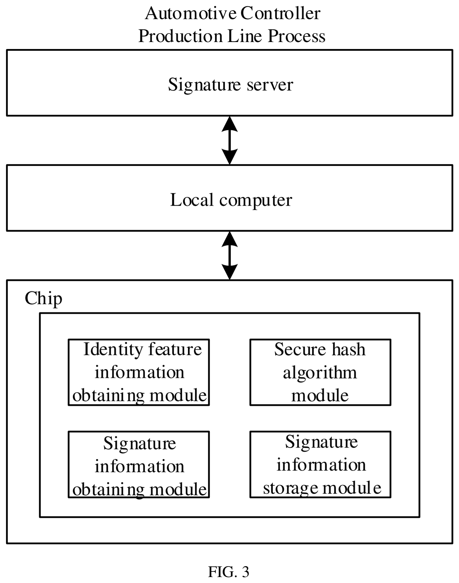

As shown in FIG. 3, the present disclosure further provides an anti-replacement production system for an automotive controller chip, including a signature server, a local computer (PC), and an automotive controller chip. A first hash value is calculated based on chip identity feature information of the chip and saved to a FLASH memory externally connected to the chip. The first hash value is then uploaded to the local computer, which in turn uploads the first hash value to the signature server. The signature server signs the first hash value with a private key of an asymmetric algorithm and then sends signature information of the first hash value to the local computer. The local computer sends the signature information to the chip, which saves the signature information to the FLASH memory.

The automotive controller chip includes an identity feature information obtaining module, a secure hash algorithm module, a signature information obtaining module, and a signature information storage module.

The identity feature information obtaining module is configured to obtain the chip identity feature information from a one-time programmable memory of the chip.

The secure hash algorithm module is configured to provide a secure hash algorithm for generating a fixed-length hash value from the obtained identity feature information in the one-time programmable memory of the chip.

The signature information obtaining module is configured to obtain the signature information after the server signs the hash value with the private key of an asymmetric algorithm.

The signature information storage module is configured to save the hash value signature information in the FLASH memory externally connected to the chip.

### Embodiment 3

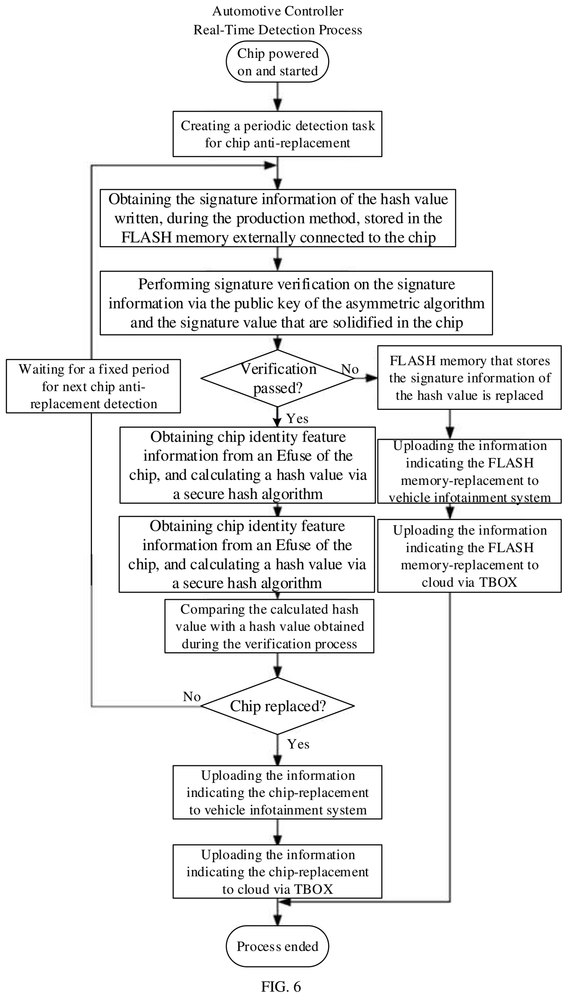

As shown in FIGS. 2 and 6, the present disclosure further provides an anti-replacement detection method for an automotive controller chip, based on the signature information obtained in the aforementioned anti-replacement production method. After the chip is powered on and started, a periodic detection task for chip anti-replacement is created to obtain the signature information written during the production method from the FLASH memory externally connected to the chip. It is recommended to set the detection cycle to 8 hours. A shorter detection cycle may consume CPU performance and potentially affect the execution of other services. The method specifically includes operations at blocks illustrated herein.

At block SA: when the chip implements a secure boot function, solidifying the public key of the asymmetric algorithm into the eFuse; performing signature verification on the signature information via the public key of the asymmetric algorithm, and obtaining a second hash value; in a case where the signature verification fails, determining that the signature information saved in the FLASH memory externally connected to the chip is incorrect and a risk that the FLASH memory has been replaced exists, and performing SB; in a case where the signature verification passes, taking the second hash value as a benchmark value and performing SC.

At block SB: uploading risk information indicating potential replacement of the FLASH memory to a vehicle infotainment system, and uploading, by the vehicle infotainment system, the risk information to a cloud via a telematics box (TBOX) system for an automobile manufacturer to review.

At block SC: obtaining the chip identity feature information saved in the one-time programmable memory of the chip, calculating a third hash value based on the chip identity feature information via a secure hash algorithm, and taking the third hash value as a measurement value. The purpose of regenerating the hash value in the detection method is to obtain a measurement value. When the chip is replaced after production, the generated measurement value will be inconsistent with the benchmark value generated during the production method, thus proving that there is a risk of chip replacement.

At block SD: comparing the measurement value and the benchmark value; in a case where the measurement value is consistent with the benchmark value, determining that the chip has not been replaced, and waiting for a fixed time cycle and then returning to SA to continue the anti-replacement detection; in a case where the measurement value is inconsistent with the benchmark value, determining that a risk that the chip has been replaced exists, uploading risk information indicating potential replacement of the chip to the vehicle infotainment system, and uploading, by the vehicle infotainment system, the risk information to the cloud via the telematics system for the automobile manufacturer to review.

In SD, the fixed time cycle may be set to 8 hours or 24 hours.

The method proposed in the above embodiments only consumes a small amount of FLASH space and chip computing resources in the automotive controller, without requiring other external devices, to achieve real-time detection of automotive controller chip anti-replacement. Through the signing and verification of the hash value of the chip identity feature information, it may prevent false detection of chip replacement caused by the replacement of the chip's external FLASH memory, thereby ensuring vehicle safety and reliability.

### Embodiment 4

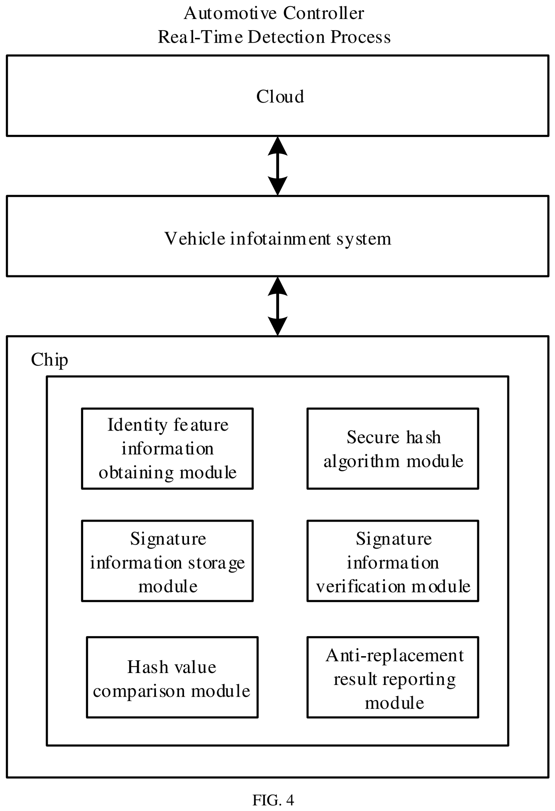

As shown in FIG. 4, the present disclosure further provides an anti-replacement detection system for an automotive controller chip, including the automotive controller chip, a cloud, and a vehicle infotainment system. It obtains the signature information stored in the chip's external FLASH memory, which was obtained through the anti-replacement production method, and uses the public key of an asymmetric algorithm to verify the signature. When the signature verification fails, it indicates that the signature information stored in the chip's external FLASH memory is incorrect, and this risk information is reported to the vehicle infotainment system and the cloud. When the signature verification passes, the second hash value is taken as a benchmark. Then, the chip identity feature information stored in the one-time programmable memory of the chip is obtained, and a secure hash algorithm is configured to calculate a third hash value as a measurement value. The measurement value and the benchmark value are compared. When the comparison result is inconsistent, it indicates a risk that the chip has been replaced, and this risk information is reported to the vehicle infotainment system and the cloud.

The automotive controller chip includes an identity feature information obtaining module, a secure hash algorithm module, a signature information storage module, a signature information verification module, a hash value comparison module, and an anti-replacement result reporting module.

The identity feature information obtaining module is configured to obtain the chip identity feature information from a one-time programmable memory of the chip.

The secure hash algorithm module is configured to provide a secure hash algorithm for generating a fixed-length hash value from the obtained identity feature information in the one-time programmable memory of the chip.

The signature information obtaining module is configured to obtain the signature information after the server signs the hash value with the private key of an asymmetric algorithm.

The signature information storage module is configured to save the hash value signature information in the FLASH memory externally connected to the chip.

The signature information verification module is configured to perform signature verification based on the public key of the asymmetric algorithm solidified in the one-time programmable memory of the chip and the signature information stored in the FLASH memory from the production method, and obtaining a corresponding hash value as a benchmark value.

The hash value comparison module is configured to recalculate the hash value of the chip identity feature information in the one-time programmable memory of the chip via a secure hash algorithm, take the hash value as a measurement value, and compare the measurement value with the benchmark value obtained from the signature verification to determine whether the measurement value and the benchmark value are consistent.

The anti-replacement result reporting module is configured to report the risk information regarding whether the chip has been replaced to the vehicle infotainment system and the cloud.

In summary, the embodiments of the present disclosure provide an anti-replacement production and detection method and a system for an automotive controller chip. The anti-replacement production method includes obtaining chip identity feature information, calculating, saving, and uploading a first hash value, signing the uploaded first hash value, and generating and saving signature information. The anti-replacement production system includes a signature server, a local computer, and an automotive controller chip. The anti-replacement detection method includes creating a detection task, obtaining the signature information written during the production method, performing signature verification to obtain a second hash value, calculating a third hash value as a measurement value, and comparing them. The anti-replacement detection system includes an automotive controller chip, a cloud, and a vehicle infotainment system. The present disclosure only consumes a small amount of FLASH space and chip computing resources in the automotive controller, without requiring other external devices, to achieve real-time detection of automotive controller chip anti-replacement. Through the signing and verification of the hash value of the chip identity feature information, it may prevent false detection of chip replacement caused by the replacement of the chip's external FLASH memory, thereby ensuring vehicle safety and reliability.

The above descriptions are merely preferred embodiments of the present disclosure. It should be noted that those skilled in the art can make several improvements and substitutions without departing from the technical principles of the present disclosure. These improvements and substitutions should also be considered within the scope of the present disclosure.

## Claims

1. An anti-replacement production method for an automotive controller chip, **characterized by** comprising:
S1: after the automotive controller chip is powered on and started, obtaining chip identity feature information from a one-time programmable memory of the automotive controller chip.
S2: calculating to obtain a first hash value based on the chip identity feature information, and saving the first hash value to a FLASH memory externally connected to the automotive controller chip;
S3: uploading the first hash value generated based on the chip identity feature information to a local computer, then uploading, by the local computer, the first hash value to a signature server, and signing, by the signature server, the first hash value uploaded to the signature server with a private key of an asymmetric algorithm, for generating signature information; and
S4: sending, by the signature server, the signature information to the local computer, then sending, by the local computer, the signature information to the automotive controller chip, and saving, by the automotive controller chip, the signature information to the FLASH memory.

2. The anti-replacement production method according to claim 1, wherein in the S1, the chip identity feature information is a piece of information written into the one-time programmable memory of the automotive controller chip when the automotive controller chip leaves the factory, and the chip identity feature information of each chip is unique.

3. The anti-replacement production method according to claim 1 or 2, wherein in the S2, a secure hash algorithm is applied to calculate and obtain the first hash value from the chip identity feature information, and the first hash value is then saved to the FLASH memory; the secure hash algorithm comprises SHA-1, SHA-224, SHA-256, SHA-384, and SHA512.

4. The anti-replacement production method according to claim 3, wherein the first hash value has a fixed length determined by the secure hash algorithm; the secure hash algorithm is SHA-1, SHA-224, SHA-256, SHA-384, or SHA-512, wherein in a case where the SHA-1 is selected, the fixed length is 1; in a case where the SHA-224 is selected, the fixed length is 224; in a case where the SHA-256 is selected, the fixed length is 256; in a case where the SHA-384 is selected, the fixed length is 384; in a case where the SHA-512 is selected, the fixed length is 512.

5. An anti-replacement production system for an automotive controller chip, **characterized by** comprising a signature server, a local computer, and an automotive controller chip; wherein a first hash value is configured to be calculated and obtained based on chip identity feature information of the automotive controller chip and saved to a FLASH memory externally connected to the automotive controller chip; the first hash value is configured to be uploaded to the local computer; the local computer is configured to upload the first hash value to the signature server; the signature server is configured to sign the first hash value with a private key of an asymmetric algorithm and then send signature information of the first hash value to the local computer; the local computer is configured to send the signature information to the automotive controller chip, and the automotive controller chip is configured to save the signature information in the FLASH memory.

6. The anti-replacement production system according to claim 5, wherein the automotive controller chip comprises an identity feature information obtaining module, a secure hash algorithm module, a signature information obtaining module, and a signature information storage module;
the identity feature information obtaining module is configured to obtain the chip identity feature information from a one-time programmable memory of the automotive controller chip;
the secure hash algorithm module is configured to provide a secure hash algorithm for generating a fixed-length hash value from the identity feature information in the one-time programmable memory of the automotive controller chip;
the signature information obtaining module is configured to obtain the signature information after the server signs the hash value with the private key of the asymmetric algorithm; and
the signature information storage module is configured to save the signature information in the FLASH memory externally connected to the automotive controller chip.

7. The anti-replacement production system for an automotive controller chip according to claim 6, wherein the secure hash algorithm comprises SHA-1, SHA-224, SHA-256, SHA-384, and SHA512.

8. The anti-replacement production system for an automotive controller chip according to claim 7, wherein the first hash value has a fixed length determined by the secure hash algorithm; the secure hash algorithm is SHA-1, SHA-224, SHA-256, SHA-384, or SHA-512, wherein in a case where the SHA-1 is selected, the fixed length is 1; in a case where the SHA-224 is selected, the fixed length is 224; in a case where the SHA-256 is selected, the fixed length is 256; in a case where the SHA-384 is selected, the fixed length is 384; in a case where the SHA-512 is selected, the fixed length is 512.

9. The anti-replacement production system according to claim 5, wherein the chip identity feature information is a piece of information written into the one-time programmable memory of the automotive controller chip when the automotive controller chip leaves the factory, and the chip identity feature information of each chip is unique.

10. An anti-replacement detection method for an automotive controller chip, **characterized by** being based on the signature information obtained in the anti-replacement production method according to any one of claims 1 to 4, and comprising:
SA: performing signature verification on the signature information via the public key of the asymmetric algorithm, and obtaining a second hash value; in a case where the signature verification fails, determining that the signature information saved in the FLASH memory externally connected to the chip is incorrect and a risk that the FLASH memory has been replaced exists, and performing SB; in a case where the signature verification passes, taking the second hash value as a benchmark value and performing SC;
SB: uploading risk information indicating potential replacement of the FLASH memory to a vehicle infotainment system, and uploading, by the vehicle infotainment system, the risk information to a cloud via a telematics box (TBOX) system;
SC: obtaining the chip identity feature information saved in the one-time programmable memory of the chip, calculating to obtain a third hash value based on the chip identity feature information via a secure hash algorithm, and taking the third hash value as a measurement value; and
SD: comparing the measurement value and the benchmark value; in a case where the measurement value is consistent with the benchmark value, determining that the chip has not been replaced, and waiting for a fixed time cycle and then returning to the SA to continue anti-replacement detection; in a case where the measurement value is inconsistent with the benchmark value, determining that a risk that the chip has been replaced exists, uploading risk information indicating potential replacement of the chip to the vehicle infotainment system, and uploading, by the vehicle infotainment system, the risk information to the cloud via the telematics system.

11. The anti-replacement detection method according to claim 10, wherein in the SD, the fixed time cycle is set to 8 hours or 24 hours.

12. An anti-replacement detection system for an automotive controller chip, **characterized by** comprising an automotive controller chip, a cloud, and a vehicle infotainment system;
wherein signature information stored in a FLASH memory externally connected to the automotive controller chip is obtained, which is obtained through an anti-replacement production method for an automotive controller chip; a public key of an asymmetric algorithm to is applied to perform signature verification on the signature information; in a case where the signature verification fails, it is indicated that the signature information saved in the FLASH memory externally connected to the automotive controller chip is incorrect, and risk information is reported to the vehicle infotainment system and the cloud; in a case where the verification passes, a second hash value is taken as a benchmark value; the chip identity feature information saved in the one-time programmable memory of the automotive controller chip is obtained, and a secure hash algorithm is applied to calculate a third hash value as a measurement value; the measurement value and the benchmark value are compared; in a case where the comparison result is inconsistent, it is indicated that a risk that the chip has been replaced exists, and risk information is reported to the vehicle infotainment system and the cloud.

13. The anti-replacement detection system for an automotive controller chip according to claim 12, wherein the automotive controller chip comprises an identity feature information obtaining module, a secure hash algorithm module, a signature information storage module, a signature information verification module, a hash value comparison module, and an anti-replacement result reporting module;
the identity feature information obtaining module is configured to obtain the chip identity feature information from a one-time programmable memory of the automotive controller chip;
the secure hash algorithm module is configured to provide a secure hash algorithm for generating a fixed-length hash value from the identity feature information in the one-time programmable memory of the automotive controller chip;
the signature information obtaining module is configured to obtain the signature information after the server signs the hash value with the private key of the asymmetric algorithm;
the signature information storage module is configured to save the signature information in the FLASH memory externally connected to the automotive controller chip;
the signature information verification module configured to perform signature verification based on the public key of the asymmetric algorithm solidified in the one-time programmable memory of the chip and the signature information stored in the FLASH memory from the production method, and obtaining a corresponding hash value as a benchmark value;
the hash value comparison module is configured to recalculate the hash value of the chip identity feature information in the one-time programmable memory of the chip via a secure hash algorithm, take the hash value as a measurement value, and compare the measurement value with the benchmark value obtained from the signature verification to determine whether the measurement value and the benchmark value are consistent; and
the anti-replacement result reporting module is configured to report the risk information regarding whether the chip has been replaced to the vehicle infotainment system and the cloud.
